(19) Europäisches Patentamt
European Patent Office
Office européen des brevets

(11) **EP 3 255 809 B1**

(12) **EUROPEAN PATENT SPECIFICATION**

(45) Date of publication and mention of the grant of the patent:
**02.01.2019 Bulletin 2019/01**

(51) Int Cl.:
*H04B 3/487* (2015.01)  *H04M 3/34* (2006.01)
*H04M 11/06* (2006.01)

(21) Application number: **16305677.3**

(22) Date of filing: **09.06.2016**

(54) **METHOD AND DEVICE FOR DETECTING A CROSSTALK ISSUE ON A DIGITAL SUBSCRIBER LINE**

VERFAHREN UND VORRICHTUNG ZUR DETEKTION EINES ÜBERSPRECHUNGSPROBLEMS AUF EINER DIGITALEN TEILNEHMERLEITUNG

PROCÉDÉ ET DISPOSITIF PERMETTANT DE DÉTECTER UN PROBLÈME DE DIAPHONIE SUR UNE LIGNE D'ABONNÉ NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2017 Bulletin 2017/50**

(73) Proprietor: **Alcatel Lucent**
**91620 Nozay (FR)**

(72) Inventors:
• **WAHIBI, Issam**
**2018 Antwerpen (BE)**
• **DROOGHAAG, Benoît**
**6041 Gosselies (BE)**

(74) Representative: **Nokia EPO representatives**
**Nokia Technologies Oy**
**Karaportti 3**
**02610 Espoo (FI)**

(56) References cited:
**WO-A1-2013/141840    US-A1- 2008 288 190**

**Description**

FIELD OF THE INVENTION

The present invention relates to the field of telecommunications. In particular, the present invention relates to a method and a device for detecting a crosstalk issue on a Digital Subscriber Line.

BACKGROUND

G.Fast is a Digital Subscriber Line (DSL) technology, defined in ITU-T standards (ITU-T G.9700 for power spectral density specification, ITU-T G.9701 for physical layer specification and ITU-T G.997.2 for physical layer management for FAST transceivers). Also, the broadband forum defines Technical recommendation TR-301 for FTTdp.

Crosstalk resulting from interference between different lines is a major source of channel impairments in Digital Subscriber Line (DSL) systems. Vectoring is a crosstalk cancellation mechanism for DSL lines, which is applied in G.Fast. Crosstalk induced by disturbing DSL lines into a victim DSL line is cancelled by adding an anti-signal to the victim DSL line that compensates for the crosstalk noise from the disturbing DSL lines. Vectoring can be done for plural disturbing DSL lines enabling to suppress simultaneously the crosstalk from all these disturbing DSL lines within the victim DSL line. Vectoring relies on grouping communication lines in a so called vectoring group. The choice of the vectoring group, i.e. the set of communication lines the signals of which are jointly processed, is rather critical for achieving good crosstalk mitigation performances. Ideally, the vectoring group contains lines that form part of the same binder or bundle, but a vectoring group may also contain lines that belong to two or more different binders.

Even when vectoring is used, a DSL can be affected by a crosstalk issue such as a cross-wired line or alien crosstalk.

A cross-wired line is defined as a line belonging to a given vectoring group, but of whom its lines members do not coexist with it in the same physical binder. In fact, this is a line which was badly wired in the wrong vectoring group by the DSL operator. Techniques have been proposed for identifying these lines diagnosed as cross-wired. However, the known techniques require a service interruption of the suspected cross-wired line.

The alien crosstalk is the crosstalk or noise coming from outside the vectoring group and that cannot be removed by vectoring. The source of this alien crosstalk can be other G.Fast lines from other operators but sharing the same physical binder, cross-wired lines, other VDSL2 lines when there is a frequency overlap in VDSL2 frequency band, or any other sources of interference (wireless, RFI...).

A known solution for detecting a cross-wired line or alien crosstalk relies on passive collection of network data over time, and on determining a crosstalk heatmap or crosstalk matrix. However, interoperability is an issue because the crosstalk coefficients of the crosstalk matrix are not defined in the G.Fast standards. Moreover, collecting the network data every day in order to update the crosstalk matrix represents a huge amount of data to collect and therefore involves complexity limitations.

WO2013/141840 A1 relates to diagnosis of DSL lines and uses the Active Line Noise. US2008/0288190 A1 relates to determining an impedance mismatch and uses the Active Line Noise.

SUMMARY

It is thus an object of embodiments of the present invention to propose methods and devices for detecting a crosstalk issue on a Digital Subscriber Line, which do not show the inherent shortcomings of the prior art.

Accordingly, embodiments relate to a method for detecting a crosstalk issue on a Digital Subscriber Line of a vectoring group, executed by a monitoring device, comprising:

- receiving operational data representative of the Quiet Line Noise and the Active Line Noise of said Digital Subscriber Line, and
- detecting a crosstalk issue in function of said Quiet Line Noise and/or the Active Line Noise.

Correspondingly, embodiments relate to a monitoring device for detecting a crosstalk issue on a Digital Subscriber Line of a vectoring group, comprising:

- means for receiving operational data representative of the Quiet Line Noise and the Active Line Noise of said Digital Subscriber Line, and
- means for detecting a crosstalk issue in function of said Quiet Line Noise and/or the Active Line Noise.

In some embodiments, said Quiet Line Noise and Active Line Noise are as specified in Amendment 1 to Recommendation ITU-T G.9701.

Detecting a crosstalk issue may comprise:

- determining successive values of a first metric representative of an average difference, for respective tones, between the Quiet Line Noise and the Active Line Noise,
- in response to determining that the first metric is below a first threshold for a predetermined period of time, determining that said Digital Subscriber Line is affected by cross-talk.

Detecting a crosstalk issue may comprise:

- determining successive values of a second metric representative the average Quiet Line Noise, for respective tones,
- in response to determining that the second metric is above a second threshold for a predetermined period of time, determining that said Digital Subscriber Line is affected by alien crosstalk.

In some embodiments, said operational data are representative of the Quiet Line Noise of respective Digital Subscriber Lines of a vectoring group, and detecting a crosstalk issue comprises:

- determining successive values of a third metric representative an average Quiet Line Noise of the vectoring group,
- in response to determining that the third metric is above a third threshold for a predetermined period of time, determining that said vectoring group is affected by alien crosstalk.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a bloc diagram of a telecommunication network,
Figure 2 is a flowchart of a method for detecting a crosstalk issue on a Digital Subscriber Line, in the network of Figure 1, and
Figure 3 is structural view of a monitoring device for detecting a crosstalk issue on a Digital Subscriber Line.

DESCRIPTION OF EMBODIMENTS

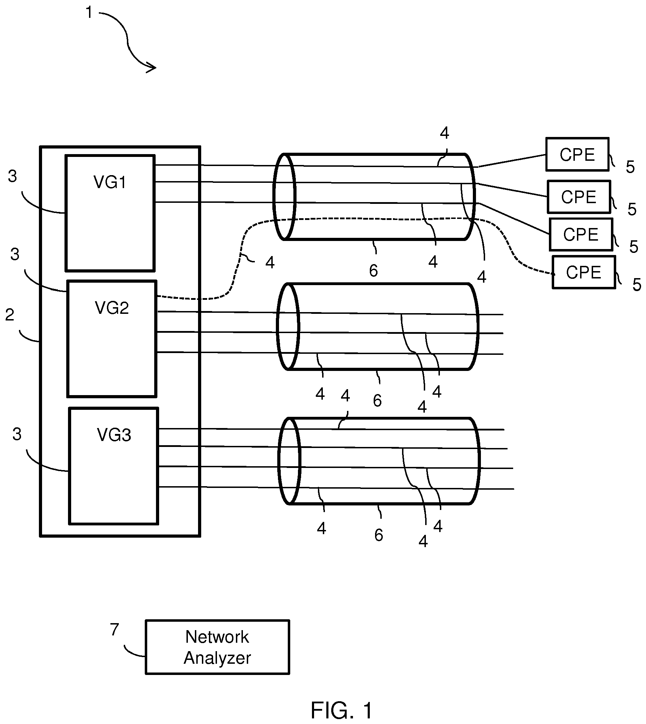

**Figure 1** is a bloc diagram of a telecommunication network 1. The telecommunication network 1 comprises an access node 2 connected to user nodes 5 by respective Digital Subscriber Lines 4, and a monitoring device 7. The Digital Subscriber Lines 4 are grouped in respective binders 6. Not all user nodes 5 are showed for simplicity.

The access node 2 and the user nodes 5 use a Digital Subscriber Line (DSL) technology with a crosstalk cancellation mechanism, for example G.Fast, for communication over the Digital Subscriber Lines 4. For example, the access node 2 is or comprises a DSLAM and a user node 5 is a customer premises equipment (CPE) including a DSL modem.

Vectoring comprises jointly-processing a plurality of lines together in a vectoring group 3. In the example of Figure 1, the access node 2 comprises three vectoring groups 3, denoted VG1, VG2 and VG3. The vectoring group VG3 illustrates an ideal situation, wherein the Digital Subscriber Lines 4 of the vectoring group VG3 match the Digital Subscriber Lines 4 of a binder 6. In contrast, the vectoring groups VG1 and VG2 illustrate a cross-wired line, shown in dashed line. The cross-wired line belongs to the vectoring group VG2 but is located in the same binder 6 as the Digital Subscriber Lines 4 of the vectoring group VG1. Accordingly, the cross-talk from the cross-wired line into the other Digital Subscriber Lines 4 of the vectoring group VG1 is not correctly cancelled. Likewise, the crosstalk from the other Digital Subscriber Lines 4 of the vectoring group VG1 into the cross-wired line is not correctly cancelled. Moreover, processing the signals of the cross-wired line in vectoring group VG2 is unnecessary.

The monitoring device 7 may obtain operational data relating to the functioning of the access node 2, the vectoring groups 3, the Digital Subscriber Lines 4 and/or the user nodes 5. For example, the access node 2 and/or the user nodes 5 send operational data to the monitoring device 7 on a regular basis or in response to a request. In particular, the operational data specify the Quiet Line Noise (QNL) and the Active Line Noise (ANL) for respective Digital Subscriber Lines 4. Based on the obtained Quiet Line Noise and the Active Line Noise, the monitoring device 7 detects a crosstalk issue, for example a cross-wired line or alien crosstalk, on a Digital Subscriber Line 4. The monitoring device 7 may be a network analyzer which, in addition to the detection of crosstalk issues, performs other monitoring, troubleshooting and management tasks related to the access node 2, the vectoring groups 3, the Digital Subscriber Lines 4 and/or the user nodes 5.

For the G.Fast technology, the QLN (Quiet Line Noise) and ALN (Active Line Noise) are defined in Amendment 1 to Recommendation ITU-T G.9701.

The QLN represents the noise present on the loop expressed in dBm/Hz when all lines of a vectored group are either transmitting QUIET symbols or are turned off. The QLN shall be measured by the VCE (Vector Controller Entity) during showtime, and shall be updated during showtime. The reported QLN values shall be represented by sub-carrier groups.

The ALN represents the total noise which includes the extrinsic noise present on the loop, all FTU receiver internal noises and residual crosstalk. It is defined for downstream only and measured and by FTU-R during showtime and during L0 state only (when the line is in full data rate, and not in low power state L2.1, in standby state L2.2 or in L3 state when the line is silent). The line state of other lines served by the same DPU may stay in whatever line state they are in.

The analysis of the difference between QLN and ALN of the different lines in the same vectoring groups and the correlation of this difference with the current states (silent or showtime) of these lines can be used to detect the presence of cross-wired lines and/or alien crosstalk.

For example, the QLN and ALN should be very close if the line is cross-wired, because even if all lines of the same vectoring group are silent, the total self-crosstalk comes from the lines sharing the same physical binder which are not connected to the same vectoring group. Then, the QLN of this cross-wired line is abnormally high compared with QLN of other lines. It can happen that the other disturbers are down, and in this case QLN and ALN are also close to one another. In that case, and in order to distinguish between the cross-wired line and the case where all other disturbers are down, the monitoring device 7 monitors the evolution in time of the difference between QLN and ALN. In cross-wired case, this difference is constant in the time, and time limited for the other case.

Also, if the line is impacted by an alien crosstalk, the corresponding QLN should be higher than the lines which are not impacted.

Finally, if the vectoring group is impacted by an alien crosstalk, the corresponding average of QLNs should be higher than the vectoring groups which are not impacted.

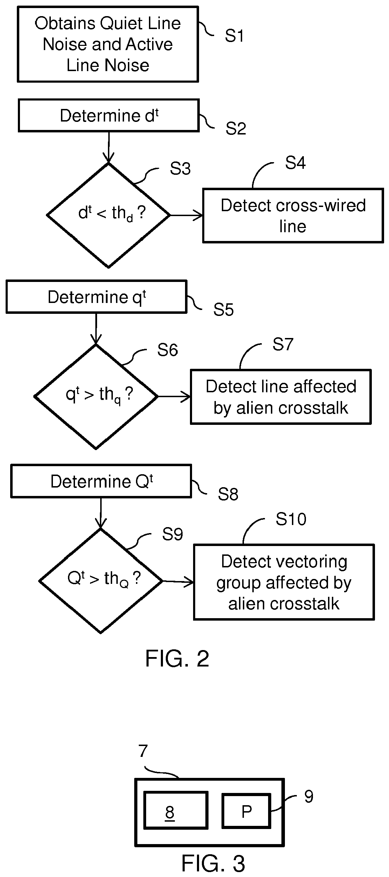

**Figure 2** is a flowchart of a method for detecting a crosstalk issue on a Digital Subscriber Line 4, executed by the monitoring device 7.

The monitoring device 7 obtains operational data representative of the Quiet Line Noise and the Active Line Noise of respective Digital Subscriber Lines 4 (Step S1).

For respective Digital Subscribers Lines 4, the monitoring device 7 determines a metric $d^t$ representative of differences between QLN and ALN (Step S2). For example, the monitoring device 7 determines an average of differences between QLN and ALN:

$$d^t = \frac{\sum_{n=1}^{N}\left(ALN_n^t - QLN_n^t\right)}{N} \quad \text{(Eq. 1)}$$

wherein $ALN_n^t$ is the measured ALN at time t in tone n, $QLN_n^t$ is the measured QLN at time t in tone n and N is the total number of tones. The metric $d^t$ is determined for successive time t, for example based on period P comprised between every day and every fifteen minutes. In order to reduce the complexity of storing data in database, in some embodiments, the monitoring device 7 stores successive values of this metric $d^t$ without storing successive values of QLN and ALN.

If the Digital Subscriber Line 4 is cross-wired (wired to the wrong vectoring group), the corresponding metric $d^t$ should be small and constant in time compared with other lines because even if all lines of the same vectoring group are silent, the total self-crosstalk comes from the lines sharing the same physical binder which are not connected to the same vectoring group. So, we can define a threshold $th_d$ that when the metric $d^t$ is below this threshold during a predefined time (for example a few days), a cross-wired line can be suspected.

Thus, the monitoring device 7 compares successive values of the metric $d^t$ with a predetermined threshold $th_d$ (Step S3) and, in response to determining that the metric $d^t$ is below the threshold $th_d$ during a predefined time period, the monitoring device 7 determines that the Digital Subscriber Line 4 is cross-wired (Step S4). In that case, the monitoring device 7 may display information and/or send a message specifying that the Digital Subscriber Line 4 has been determined to be cross-wired. This may trigger various corrective actions, such as rewiring by a technician.

If a Digital Subscriber Line 4 is impacted by an alien crosstalk which cannot be removed by vectoring, the level of corresponding QLN should be higher than the other lines in the same vectoring group. The monitoring device 7 determines a metric $q^t$ which represents the average of QLN of a Digital Subscriber Line 4 (Step S5):

$$q^t = \frac{\sum_{n=1}^{N}\left(QLN_n^t\right)}{N} \quad \text{(Eq. 2)}$$

wherein $QLN_n^t$ is the measured QLN at time t in tone n and N is the total number of tones. Successive values of $q^t$ are determined and stored, for example based on a period P comprised between 24 hours and 15 minutes. A threshold $th_q$ can be predefined such that when the metric $q^t$ is above this threshold $th_q$ during a predefined time (for example, a few days), an alien crosstalk can be suspected on a given line.

Thus, the monitoring device 7 compares successive values of the metric $q^t$ with a predetermined threshold $th_q$ (Step S6) and, in response to determining that the metric $q^t$ is above this threshold $th_q$ during a predefined time period, the monitoring device 7 determines that the Digital Subscriber Line 4 is affected by alien crosstalk (Step S7). In that case, the monitoring device 7 may display information and/or send a message specifying that the Digital Subscriber Line 4 has been determined to be affected by alien crosstalk. This may trigger various corrective actions, such as a troubleshooting by a technician.

All the Digital Subscriber Lines 4 of a vectoring group can be impacted by alien crosstalk. In this case the average of QLN of all lines of the vectoring group should be high compared with others vectoring groups. The monitoring device 7 determines a metric $Q^t$ which represents the average of QLN of a vectoring group (Step S8):

$$Q^t = \frac{\sum_{i=1}^{P}(q_i^t)}{P} \quad \text{(Eq. 3)}$$

wherein $q_i^t$ is the average of QLN for line i at time t and P is the total number of lines in the vectoring group. Successive values of $Q^t$ are determined and stored, for example based on a period P comprised between 24 hours and 15 minutes. A threshold $th_Q$ can be predefined such that when the metric $Q^t$ is above this threshold during a predefined time (for examples, a few days), the monitoring device 7 determines that the vectoring group is affected by alien crosstalk.

Thus, the monitoring device 7 compares successive values of the metric $Q^t$ with a predetermined threshold $th_Q$ (Step S9) and, in response to determining that the metric $Q^t$ is above this threshold $th_Q$ during a predefined time period, the monitoring device 7 determines that the vectoring group is affected by alien crosstalk (Step S10). In that case, the monitoring device 7 may display information and/or send a message specifying that the vectoring group has been determined to be affected by alien crosstalk. This may trigger various corrective actions, such as a troubleshooting by a technician.

Although steps S1 to S10 are described as successive steps, they may be executed in another order, in parallel and/or iterated.

In the network 1, the monitoring device 7 may detect a cross-wired line, a line affected by alien crosstalk and/or a vectoring group affected by alien crosstalk, in function of the QLN and ALN of Digital Subscriber Lines 4. Since the QNL and ANL are specified by an ITU Recommendation, interoperability is improved and the use of proprietary solutions may be avoided or limited. Moreover, since the detection relies on successive values for metrics $d^t$, $q^t$ and $Q^t$, the amount of data to be stored and the complexity are reduced in comparison with the use of crosstalk matrix.

**Figure 3** is a structural view of the monitoring device 7, which comprises a processor 8 and a memory 9. The memory 9 stores a computer program P which, when executed by the processor 7, causes the monitoring device 7 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for detecting a crosstalk issue on a Digital Subscriber Line (4) of a vectoring group (3), executed by a monitoring device (7), comprising:

   - receiving (S1) operational data representative of the Quiet Line Noise and the Active Line Noise of said Digital Subscriber Line, and
   - detecting a crosstalk issue in function of said Quiet Line Noise and/or the Active Line Noise,

   **characterized in that** detecting a crosstalk issue comprises:

   - determining (S2) successive values of a first metric ($d^t$) representative of an average difference, for respective tones, between the Quiet Line Noise and the Active Line Noise,
   - in response to determining (S3) that the first metric ($d^t$) is below a first threshold ($th_d$) for a predetermined period of time, determining (S4) that said Digital Subscriber Line (4) is affected by cross-talk.

**2.** Method according to claim 1, wherein said Quiet Line Noise and Active Line Noise are as specified in Amendment 1 to Recommendation ITU-T G.9701.

**3.** Method according to one of claims 1 to 2, wherein detecting a crosstalk issue comprises:

- determining (S5) successive values of a second metric ($q^t$) representative the average Quiet Line Noise, for respective tones,
- in response to determining (S6) that the second metric ($q^t$) is above a second threshold ($th_q$) for a predetermined period of time, determining (S7) that said Digital Subscriber Line (4) is affected by alien crosstalk.

**4.** Method according to one of claims 1 to 3, wherein said operational data are representative of the Quiet Line Noise of respective Digital Subscriber Lines (4) of a vectoring group (3), and wherein detecting a crosstalk issue comprises:

- determining (S8) successive values of a third metric ($Q^t$) representative an average Quiet Line Noise of the vectoring group (3),
- in response to determining (S9) that the third metric ($Q^t$) is above a third threshold ($th_Q$) for a predetermined period of time, determining (S10) that said vectoring group (3) is affected by alien crosstalk.

**5.** Computer program (P) comprising instructions for performing the method of one of claims 1 to 4 when said instructions are executed by a computer.

**6.** Monitoring device (7) for detecting a crosstalk issue on a Digital Subscriber Line (4) of a vectoring group (3), comprising:

- means (8, 9, P) for receiving operational data representative of the Quiet Line Noise and the Active Line Noise of said Digital Subscriber Line, and
- means (8, 9, P) for detecting a crosstalk issue in function of said Quiet Line Noise and/or the Active Line Noise,

**characterized in that** detecting a crosstalk issue comprises:

- determining (S2) successive values of a first metric ($d^t$) representative of an average difference, for respective tones, between the Quiet Line Noise and the Active Line Noise,
- in response to determining (S3) that the first metric ($d^t$) is below a first threshold ($th_d$) for a predetermined period of time, determining (S4) that said Digital Subscriber Line (4) is affected by cross-talk.

**7.** Monitoring device (7) to claim 6, wherein said Quiet Line Noise and Active Line Noise are as specified in Amendment 1 to Recommendation ITU-T G.9701.

**8.** Monitoring device (7) according to one of claims 6 to 7, wherein detecting a crosstalk issue comprises:

- determining (S5) successive values of a second metric ($q^t$) representative the average Quiet Line Noise, for respective tones,
- in response to determining (S6) that the second metric ($q^t$) is above a second threshold ($th_q$) for a predetermined period of time, determining (S7) that said Digital Subscriber Line (4) is affected by alien crosstalk.

**9.** Monitoring device (7) according to one of claims 6 to 8, wherein said operational data are representative of the Quiet Line Noise of respective Digital Subscriber Lines (4) of a vectoring group (3), and wherein detecting a crosstalk issue comprises:

- determining (S8) successive values of a third metric ($Q^t$) representative an average Quiet Line Noise of the vectoring group (3),
- in response to determining (S9) that the third metric ($Q^t$) is above a third threshold ($th_Q$) for a predetermined period of time, determining (S10) that said vectoring group (3) is affected by alien crosstalk.

**Patentansprüche**

**1.** Verfahren zum Erkennen eines Crosstalk-Problems in einer digitalen Abonnentenleitung (4) einer vektorisierenden Gruppe (3), ausgeführt von einer Überwachungsvorrichtung (7), umfassend:

- Empfangen(S1) von Betriebsdaten, die repräsentativ sind für das Leerkanalrauschen und aktive Kanalrauschen besagter digitaler Abonnentenleitung, und
- Erkennen eines Crosstalk-Problems als Funktion besagten Leerkanalrauschens und/oder aktiven Kanalrauschens, **dadurch gekennzeichnet, dass** das Erkennen eines Crosstalk-Problems umfasst:

- Bestimmen (S2) aufeinanderfolgender Werte einer ersten Metrik ($d^t$), die repräsentativ ist für eine durchschnittliche Differenz, für entsprechende Töne, zwischen dem Leerkanalrauschen und dem aktiven Kanalrauschen,
- als Antwort auf das Bestimmen (S3), dass die erste Metrik ($d^t$) unterhalb eines ersten Schwellenwerts ($th_d$) liegt für einen vorbestimmten Zeitraum, Bestimmen (S4), dass besagte digitale Abonnentenleitung (4) von Crosstalk betroffen ist.

2. Verfahren nach Anspruch 1, besagtes Leerkanalrauschen und aktive Kanalrauschen wie in Ergänzung 1 zur Empfehlung ITU-T G.9701 spezifiziert sind.

3. Verfahren nach einem der Ansprüche 1 bis 2, wobei das Erkennen eines Crosstalk-Problems umfasst:

- Bestimmen (S5) aufeinanderfolgender Werte einer zweiten Metrik ($q^t$), die repräsentativ sind für das durchschnittliche Leerkanalrauschen, für entsprechende Töne,
- als Antwort auf das Bestimmen (S6), dass die zweite Metrik ($q^t$) oberhalb eines zweiten Schwellenwerts ($th_q$) liegt für einen vorbestimmten Zeitraum, Bestimmen (S7), dass besagte digitale Abonnentenleitung (4) von Alien-Crosstalk betroffen ist.

4. Verfahren nach einem der Ansprüche 1 bis 3, wobei besagte Betriebsdaten repräsentativ sind für das Leerkanalrauschen entsprechender digitaler Abonnentenleitungen (4) einer vektorisierenden Gruppe (3), und wobei das Erkennen eines Crosstalk-Problems umfasst:

- Bestimmen (S8) aufeinanderfolgender Werte einer dritten Metrik ($Q^t$), die repräsentativ sind für ein durchschnittliches Leerkanalrauschen der vektorisierenden Gruppe (3),
- als Antwort auf das Bestimmen (S9), dass die dritte Metrik ($Q^t$) oberhalb eines dritten Schwellenwerts ($th_Q$) liegt für einen vorbestimmten Zeitraum, Bestimmen (S10), dass besagte vektorisierende Gruppe (3) von Alien-Crosstalk betroffen ist.

5. Computerprogramm (P), umfassend Befehle zum Durchführen des Verfahrens nach einem der Ansprüche 1 bis 4, wenn besagte Befehle ausgeführt werden auf einem Computer.

6. Überwachungsvorrichtung (7) zum Erkennen eines Crosstalk-Problems in einer digitalen Abonnentenleitung (4) einer vektorisierenden Gruppe (3), umfassend:

- Mittel (8, 9, P) zum Empfangen von Betriebsdaten, die repräsentativ sind für das Leerkanalrauschen und aktive Kanalrauschen besagter digitaler Abonnentenleitung, und
- Mittel (8, 9, P) zum Erkennen eines Crosstalk-Problems als Funktion besagten Leerkanalrauschens und/oder des aktiven Kanalrauschens, **dadurch gekennzeichnet, dass** das Erkennen eines Crosstalk-Problems umfasst:

- Bestimmen (S2) aufeinanderfolgender Werte einer ersten Metrik ($d^t$), die repräsentativ ist für eine durchschnittliche Differenz, für entsprechende Töne, zwischen dem Leerkanalrauschen und dem aktiven Kanalrauschen,
- als Antwort auf das Bestimmen (S3), dass die erste Metrik ($d^t$) unterhalb eines ersten Schwellenwerts ($th_d$) liegt für einen vorbestimmten Zeitraum, Bestimmen (S4), dass besagte digitale Abonnentenleitung (4) von Crosstalk betroffen ist.

7. Überwachungsvorrichtung (7) nach Anspruch 6, wobei besagtes Leerkanalrauschen und das aktive Kanalrauschen wie in Ergänzung 1 zur Empfehlung ITU-T G.9701 spezifiziert sind.

8. Überwachungsvorrichtung (7) nach einem der Ansprüche 6 bis 7, wobei das Erkennen eines Crosstalk-Problems umfasst:

- Bestimmen (S5) aufeinanderfolgender Werte einer zweiten Metrik ($q^t$), die repräsentativ sind für das durchschnittliche Leerkanalrauschen, für entsprechende Töne,
- als Antwort auf das Bestimmen (S6), dass die zweite Metrik ($q^t$) oberhalb eines zweiten Schwellenwerts ($th_q$) liegt für einen vorbestimmten Zeitraum, Bestimmen (S7), dass besagte digitale Abonnentenleitung (4) von Alien-Crosstalk betroffen ist.

9. Überwachungsvorrichtung (7) nach einem der Ansprüche 6 bis 8, wobei besagte Betriebsdaten repräsentativ sind für das Leerkanalrauschen entsprechender digitaler Abonnentenleitungen (4) einer vektorisierenden Gruppe (3), und wobei das Erkennen eines Crosstalk-Problems umfasst:

- Bestimmen (S8) aufeinanderfolgender Werte einer dritten Metrik ($Q^t$), die repräsentativ sind für ein durchschnittliches Leerkanalrauschen der vektorisierenden Gruppe (3),
- als Antwort auf das Bestimmen (S9), dass die dritte Metrik ($Q^t$) oberhalb eines dritten Schwellenwerts ($th_Q$) liegt für einen vorbestimmten Zeitraum, Bestimmen (S10), dass besagte vektorisierende Gruppe (3) von Alien-Crosstalk betroffen ist.

## Revendications

1. Procédé de détection d'un problème de diaphonie sur une ligne d'abonné numérique (4) d'un groupe de vectorisation (3), exécuté par un dispositif de surveillance (7), comprenant les étapes suivantes :

   - recevoir (S1) des données opérationnelles représentatives du bruit sur ligne au repos et du bruit sur ligne active de ladite ligne d'abonné numérique, et
   - détecter un problème de diaphonie en fonction dudit bruit sur ligne au repos et/ou dudit bruit sur ligne active,

   **caractérisé en ce que** la détection d'un problème de diaphonie comprend les étapes suivantes :

   - déterminer (S2) des valeurs successives d'une première mesure ($d^t$) représentative d'une différence moyenne, pour des tonalités respectives, entre le bruit sur ligne au repos et le bruit sur ligne active,
   - en réponse à la détermination (S3) que la première mesure ($d^t$) est inférieure à un premier seuil ($th_d$) pendant une période prédéterminée, déterminer (S4) que ladite ligne d'abonné numérique (4) est affectée par la diaphonie.

2. Procédé selon la revendication 1, dans lequel ledit bruit sur ligne au repos et ledit bruit sur ligne active sont tels que spécifiés dans l'Amendement 1 à la Recommandation ITU-T G.9701.

3. Procédé selon l'une des revendications 1 et 2, dans lequel la détection d'un problème de diaphonie comprend les étapes suivantes :

   - déterminer (S5) des valeurs successives d'une deuxième mesure ($q^t$) représentative du bruit sur ligne au repos moyen, pour des tonalités respectives,
   - en réponse à la détermination (S6) que la deuxième mesure ($q^t$) est supérieure à un deuxième seuil ($th_q$) pendant une période prédéterminée, déterminer (S7) que ladite ligne d'abonné numérique (4) est affectée par la diaphonie exogène.

4. Procédé selon l'une des revendications 1 à 3, dans lequel lesdites données opérationnelles sont représentatives du bruit sur ligne au repos de lignes d'abonnés numériques (4) respectives d'un groupe de vectorisation (3), et dans lequel la détection d'un problème de diaphonie comprend les étapes suivantes :

   - déterminer (S8) des valeurs successives d'une troisième mesure ($Q^t$) représentative d'un bruit sur ligne au repos moyen du groupe de vectorisation (3),
   - en réponse à la détermination (S9) que la troisième mesure ($Q^t$) est supérieure à un troisième seuil ($th_Q$) pendant une période prédéterminée, déterminer (S10) que ledit groupe de vectorisation (3) est affecté par la diaphonie exogène.

5. Programme informatique (P) comprenant des instructions pour exécuter le procédé selon l'une des revendications 1 à 4 lorsque lesdites instructions sont exécutées par un ordinateur.

6. Dispositif de surveillance (7) destiné à détecter un problème de diaphonie sur une ligne d'abonné numérique (4) d'un groupe de vectorisation (3), comprenant :

   - des moyens (8, 9, P) pour recevoir des données opérationnelles représentatives du bruit sur ligne au repos et du bruit sur ligne active de ladite ligne d'abonné numérique, et
   - des moyens (8, 9, P) pour détecter un problème de diaphonie en fonction dudit bruit sur ligne au repos et/ou dudit bruit sur ligne active,

   **caractérisé en ce que** la détection d'un problème de diaphonie comprend les étapes suivantes :

   - déterminer (S2) des valeurs successives d'une première mesure ($d^t$) représentative d'une différence moyenne, pour des tonalités respectives, entre le bruit sur ligne au repos et le bruit sur ligne active,
   - en réponse à la détermination (S3) que la première mesure ($d^t$) est inférieure à un premier seuil ($th_d$) pendant une période prédéterminée, déterminer (S4) que ladite ligne d'abonné numérique (4) est affectée par la diaphonie.

7. Dispositif de surveillance (7) selon la revendication 6, dans lequel ledit bruit sur ligne au repos et ledit bruit sur ligne active sont tels que spécifiés dans l'Amendement 1 à la Recommandation ITU-T G.9701.

8. Dispositif de surveillance (7) selon l'une des revendications 6 et 7, dans lequel la détection d'un problème de diaphonie comprend les étapes suivantes :

   - déterminer (S5) des valeurs successives d'une deuxième mesure ($q^t$) représentative du bruit sur ligne au repos moyen, pour des tonalités respectives,
   - en réponse à la détermination (S6) que la deuxième mesure ($q^t$) est supérieure à un deuxième seuil ($th_q$) pendant une période prédéterminée, déterminer (S7) que ladite ligne d'abonné numérique (4) est affectée par la diaphonie exogène.

9. Dispositif de surveillance (7) selon l'une des revendications 6 à 8, dans lequel lesdites données opérationnelles sont représentatives du bruit sur ligne au repos de lignes d'abonnés numériques (4) respectives d'un groupe de vectorisation (3), et dans lequel la détection d'un problème de diaphonie comprend les étapes suivantes :

- déterminer (S8) des valeurs successives d'une troisième mesure ($Q^t$) représentative d'un bruit sur ligne au repos moyen du groupe de vectorisation (3),
- en réponse à la détermination (S9) que la troisième mesure ($Q^t$) est supérieure à un troisième seuil ($th_Q$) pendant une période prédéterminée, déterminer (S10) que ledit groupe de vectorisation (3) est affecté par la diaphonie exogène.

FIG. 1

Obtains Quiet Line
Noise and Active
Line Noise — S1

Determine $d^t$ — S2

S3
$d^t < th_d$ ?

S4
Detect cross-wired
line

Determine $q^t$ — S5

S6
$q^t > th_q$ ?

S7
Detect line affected
by alien crosstalk

Determine $Q^t$ — S8

S9
$Q^t > th_Q$ ?

S10
Detect vectoring
group affected by
alien crosstalk

FIG. 2

7

8   P

9

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013141840 A1

- US 20080288190 A1